**Europäisches Patentamt**

**European Patent Office**

**Office européen des brevets**

(19)

(11) Numéro de publication: **0 224 437**
**B1**

(12) **FASCICULE DE BREVET EUROPEEN**

(45) Date de publication du fascicule du brevet:
12.07.89

(51) Int. Cl.⁴: **B21D 5/02**, G01B 11/26

(21) Numéro de dépôt: 86810467.0

(22) Date de dépôt: 21.10.86

(54) Dispositif optique à faisceau lumineux pour le contrôle automatique de l'opération de pliage lors du pliage avec une presse-plieuse.

(30) Priorité: 30.10.85 CH 4655/85

(43) Date de publication de la demande:
03.06.87 Bulletin 87/23

(45) Mention de la délivrance du brevet:
12.07.89 Bulletin 89/28

(84) Etats contractants désignés:
BE CH DE FR GB IT LI NL SE

(56) Documents cités:
DE-A- 2 044 199
FR-A- 2 362 722
FR-A- 2 526 158
US-A- 4 166 369

PATENTS ABSTRACTS OF JAPAN,
vol. 9, no. 13 (P-328)[1736], 19 janvier 1985
PATENTS ABSTRACTS OF JAPAN,
vol. 9, no. 13 (P-328)[1736], 19 janvier 1985
PATENTS ABSTRACTS OF JAPAN,
vol. 9, no. 29 (M-356)[1752], 7 février 1985
PATENTS ABSTRACTS OF JAPAN,
vol. 8, no. 216 (M-329)[1653], 3 octobre 1984

(73) Titulaire: CYBELEC S.A., Rue des Uttins 27,
CH-1400 Yverdon-les-Bains(CH)

(72) Inventeur: Fornerod, André, En Loups, CH-1411 Giez
s/Yverdon(CH)
Inventeur: Gallandre, Jean-Pierre, En Chaperon,
CH-1164 Buchillon(CH)
Inventeur: Ravussin, Pierre, Rte des Monts de
Lavaux 26, CH-1092 Belmont s/Lausanne(CH)

(74) Mandataire: Hranitzky, Wilhelm Max et al, c/o WILLIAM
BLANC & CIE Conseils en Propriété Industrielle
SA 6, rue de la Grotte, CH-1003 Lausanne(CH)

## Description

L'invention concerne un dispositif optique à faisceau lumineux pour le contrôle automatique de l'opération de pliage lors du pliage avec une presse-plieuse.

Lors du pliage en l'air avec des presses-plieuses, notamment lors du pliage de tôles, la précision de l'angle de pliage obtenu dépend, d'une part, des caractéristiques de la tôle, telles que son épaisseur, qui peut varier d'une tôle à une autre, de ses caractéristiques physiques et géométriques dont dépend le retour élastique de la tôle et, d'autre part, des caractéristiques de la presse elle-même, notamment des tolérances dans la construction de la machine et de l'outillage et de l'usure des outils, et des déformations apparaissant dans la presse au moment du pliage.

La plupart des presses que l'on utilise actuellement nécessitent un réglage manuel de la presse avant le pliage et/ou pendant le pliage.

Un dispositif optique de sécurité pour presse-plieuse est décrit dans le brevet US-A-4,166,369. Ce dispositif comporte une pluralité de sources lumineuses montées d'un côté de la presse et émettant une pluralité de rayons lumineux horizontaux reçus par une pluralité de récepteurs montés de l'autre côté de la presse, l'ensemble étant agencé de façon que lorsque l'un des rayons lumineux est interrompu par une main ou un doigt de l'opérateur, le mouvement de descente du poinçon est interrompu. La seule fonction de ce dispositif est la sécurité. Il ne permet pas de déterminer l'angle de pliage de la tôle.

Des dispositifs optiques de mesure de l'angle d'une tôle sont décrits dans les demandes de brevet JP-A-59 160708 et JP-A-59 160707. Ces dispositifs utilisent un faisceau lumineux, dirigé perpendiculairement à l'axe de pliage, projeté contre l'un des pans de la tôle à plier et réfléchi sur un appareil de détection, relié à un dispositif électronique destiné à déterminer l'angle d'inclinaison du pan de la tôle. Ces dispositifs ne permettent que d'effectuer une mesure locale de l'angle de pliage, sans tenir compte des variations dudit angle le long de la pièce. De plus, ils sont inefficaces en cas de pliage asymétrique.

Le but de la présente invention est de proposer un dispositif optique à faisceau lumineux permettant de contrôler automatiquement l'opération de pliage instantané de la pièce à plier, de façon à obtenir automatiquement et exactement l'angle de pliage désiré, en évitant toute intervention manuelle avant et pendant le pliage, ce dispositif pouvant être adapté de façon simple sur tous les types de presses, qu'elles soient de construction ancienne ou récente.

A cet effet, la présente invention concerne un dispositif optique à faisceau lumineux pour le contrôle automatique de l'opération de pliage d'une presse-plieuse, tel que défini à la revendication 1.

L'invention sera mieux comprise à l'aide de la description qui suit, donnée à titre d'exemple, et qui se réfère aux dessins sur lesquels la

fig. 1 est une perspective schématique montrant un mode de réalisation du dispositif de l'invention en position de fonctionnement;

fig. 2 est une vue longitudinale schématique partiellement en coupe d'une première variante d'exécution du dispositif de l'invention;

fig. 3 est une coupe verticale transversale schématique d'une presse lors du pliage;

fig. 4 est une vue schématique de l'ombre portée de la pièce à plier sur l'analyseur d'image;

fig. 5 est une vue longitudinale en coupe partielle d'un détail de l'analyseur d'image du dispositif de la fig. 2, et

fig. 6 est une vue schématique longitudinale d'une deuxième variante d'exécution du dispositif de l'invention.

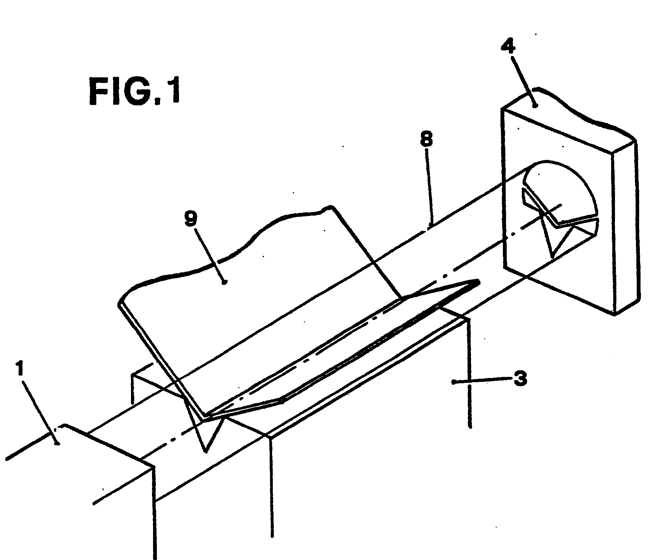

Comme représenté sur la fig. 1, le dispositif se compose d'un émetteur 1 doté d'une source lumineuse et solidaire du tablier inférieur de la presse 2 et disposé à une extrémité de la presse, et d'un récepteur 4 solidaire du tablier inférieur de la presse et disposé à l'autre extrémité de cette dernière.

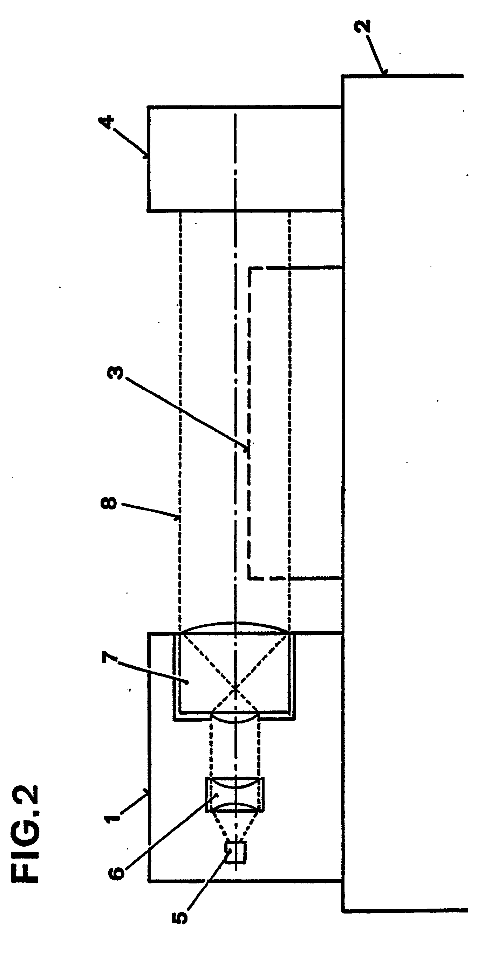

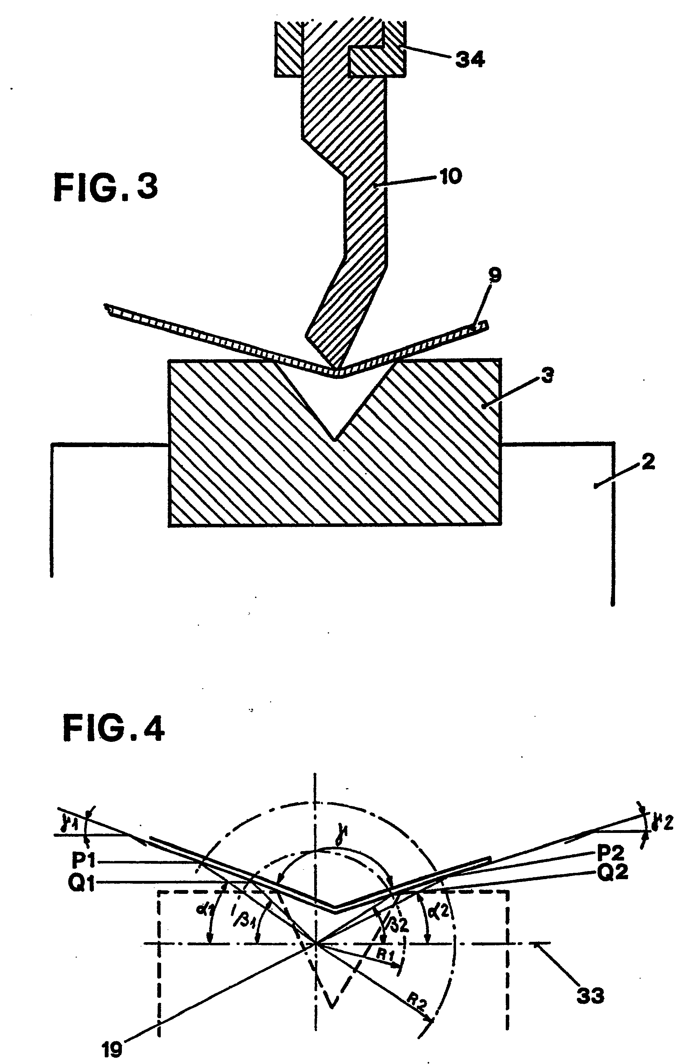

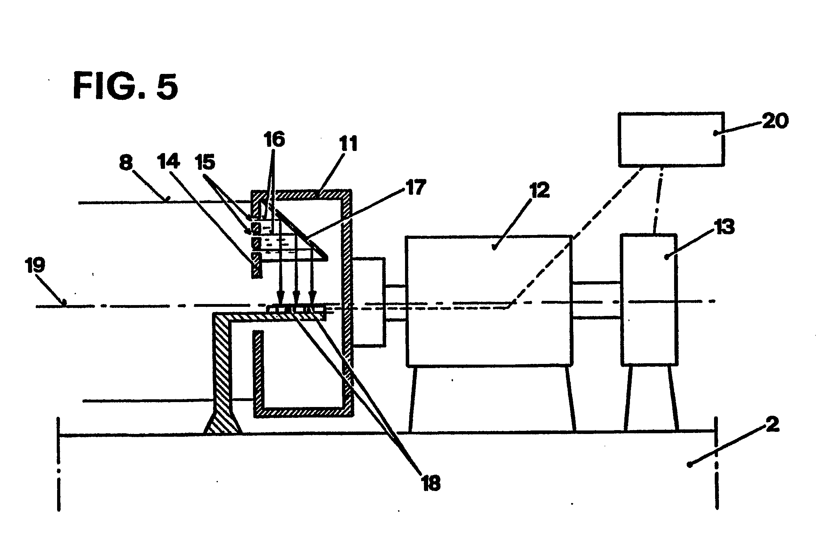

Selon une première variante d'exécution, telle que représentée schématiquement à la fig. 2, l'émetteur 1 se compose d'une diode laser 5, d'une optique de collimation 6 disposée devant la diode laser et permettant d'obtenir un faisceau lumineux homogène, et d'un téléscope inversé 7 transformant le faisceau lumineux homogène en un faisceau parallèle 8 de grand diamètre (par exemple 60 millimètres) en rapport avec les dimensions de l'outillage et dirigé parallèlement à l'axe de pliage de la pièce à plier. L'ombre de la matrice 3, de la pièce à plier 9 et du poinçon 10 (fig. 3) est projetée par le faisceau lumineux 8 sur le récepteur 4. Comme représenté sur la fig. 5, le récepteur comporte un analyseur d'image qui comprend, par exemple, une boîte 11 entraînée en rotation par un moteur 12 et solidaire d'un codeur d'angle 13 destiné à déterminer la position angulaire de la boîte 11. Les divers éléments de l'analyseur d'image sont agencés de façon qu'un écran constitué couvercle 14 de la boîte soit disposé perpendiculairement au faisceau lumineux 8. Cet écran est percé d'une pluralité de trous 15. Les faisceaux lumineux tournants 16 passant par les trous 15 sont renvoyés au moyen d'un prisme 17 sur un réseau de photodiodes fixes 18, en nombre égal à celui des trous 15 et disposées sur l'axe de rotation 19 de l'analyseur d'image. L'écran 14 peut avoir la forme d'un disque centré sur l'axe de rotation 19, parallèle à l'axe de pliage de la pièce à plier, les trous 15 étant situés sur un même rayon.

Dans une version de l'analyseur, le nombre de trous 15 et de photodiodes correspondantes 18 est de vingt, mais bien entendu, il suffit de deux faisceaux lumineux tournants 16 et de deux photodiodes correspondantes 18 pour que l'angle de pliage instantané puisse être déterminé. Pour chaque type de matrice, une paire convenable de photodiodes sera sélectionnée pour la mesure.

En se référant à la fig. 4, le calcul de l'angle de pliage instantané de la pièce à plier peut se faire de la façon suivante : les rayons R1 et R2 des cercles décrits par les faisceaux lumineux tournants 16 étant connus, on détermine facilement la position des points P1, Q1 et P2, Q2 dont les positions angulaires respectives $\alpha 1$, $\beta 1$ et $\alpha 2$, $\beta 2$ sont repérées

par le codeur d'angle au passage lumière-obscurité ou obscurité-lumière des photodiodes sélectionnées, par rapport au plan de référence 33 du codeur d'angle. Un microordinateur 20 permet de déterminer alors, à l'aide de formules connues, les angles $\gamma 1$ et $\gamma 2$ que forment les pans de la pièce à plier 9 avec le plan de référence de la matrice et, par conséquent, l'angle de pliage instantané $\gamma$ de la pièce à plier. Le microordinateur compare de façon continue l'angle de pliage instantané avec l'angle de pliage imposé et commande la descente du poinçon.

La position du poinçon 10 étant par ailleurs connue, le dispositif décrit ci-dessus est agencé de façon à fonctionner comme dispositif de sécurité lors de la descente du poinçon, avant le début du pliage de la pièce à plier. En effet, lorsque le poinçon se trouve au-dessus d'un cercle de rayon déterminé correspondant à une photodiode déterminée, il est facile de contrôler à l'aide du microordinateur qu'aucune ombre n'est détectée au-dessus du plan supérieur de la pièce à plier par les photodiodes correspondant à des faisceaux lumineux tournants et décrivant des cercles de rayons inférieurs au rayon déterminé. Lorsqu'une ombre est détectée, la descente du poinçon est immédiatement stoppée.

Le dispositif décrit ci-dessus permettant de déterminer l'angle de pliage instantané à n'importe quel moment du pliage, il est possible de déterminer l'importance du retour élastique de la pièce à plier correspondant à un dépliage partiel de la pièce à plier lorsque l'on décharge le poinçon, après que l'angle de pliage désiré a été atteint. Le dispositif est agencé de façon que ce dépliage soit compensé automatiquement. Après le dépliage, le microordinateur commande la poursuite de la descente du poinçon jusqu'à l'obtention de l'angle de pliage calculé qui est fonction de l'angle de pliage désiré et de l'angle de dépliage mesuré.

Ce dispositif permet aussi de déterminer de façon précise l'épaisseur de la pièce à plier par l'analyse de l'ombre projetée du profil de la pièce à plier au début de l'opération de pliage.

Sous les efforts dus au pliage, la presse se déforme et produit une variation de l'angle de pliage le long de la pièce à plier. Il en résulte une variation de l'épaisseur de l'ombre projetée du profil de la pièce à plier qui est prise en considération par le microordinateur, de façon à bomber automatiquement le tablier inférieur et/ou le tablier supérieur par des moyens connus par ailleurs, en agissant par exemple sur des vérins placés sous le tablier inférieur de la presse jusqu'à obtenir une épaisseur constante de l'ombre projetée de la pièce à plier.

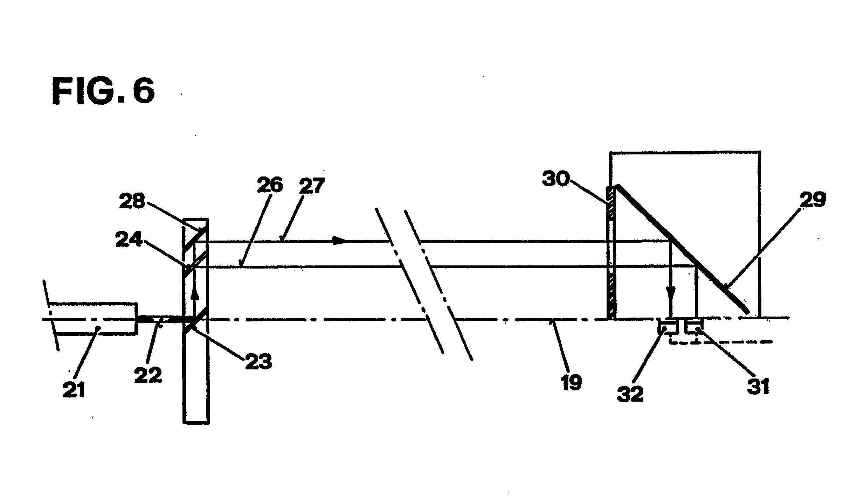

Selon une deuxième variante d'exécution du dispositif représenté à la fig. 6, les deux faisceaux lumineux tournants nécessaires à la détermination de l'angle de pliage instantané de la pièce à plier sont produits à l'aide d'une diode laser 21 émettant un faisceau laser 22 de petit diamètre, parallèle à l'axe de la pièce à plier, par exemple au plan de la matrice, ce faisceau étant dévié de 90° de son axe par un premier miroir 23 disposé sur l'axe du fais ceau et incliné à 45°, le faisceau dévié étant ensuite divisé en deux faisceaux par un deuxième miroir 24 semi-transparent, incliné à 45°, de façon que le premier faisceau dévié 26 soit parallèle au faisceau 22, le deuxième faisceau étant à son tour dévié par un troisième miroir 28 parallèle au deuxième miroir 24. On obtient ainsi deux faisceaux 26 et 27 parallèles à l'axe du faisceau laser, et donc au plan de référence de la matrice. Les trois miroirs 23, 24 et 28 sont montés sur une plaque entraînée en rotation par un moteur tournant à une vitesse constante. Cette plaque est disposée avec la diode laser, par exemple à une des extrémités du tablier inférieur de la presse. Selon cette variante d'exécution, le récepteur disposé à l'autre extrémité du tablier inférieur de la presse comporte un blindage 30 et un miroir conique 29 destiné à dévier les faisceaux 26 et 27 sur deux photodiodes 31 et 32 ou d'un miroir tournant synchrone des miroirs 23, 24 et 28. La détermination de l'angle de pliage instantané peut se faire de la même façon que décrit plus haut.

Selon une troisième variante, non représentée, les deux faisceaux lumineux tournants de la fig. 6 peuvent être produits à l'aide de deux diodes émettrices disposées sur un support entraîné en rotation par un moteur, l'axe de rotation du support étant parallèle à l'axe de pliage de la pièce à plier.

Selon une autre variante d'exécution, non représentée, l'émetteur est agencé de façon à produire un faisceau lumineux parallèle de grand diamètre du type de celui de la fig. 2, l'ombre portée de ce faisceau par la pièce à plier et l'outillage étant projetée sur un récepteur d'images électronique et analysée par un microordinateur.

Les moyens d'émission et de réception décrits ci-dessus peuvent être montés solidaires du tablier inférieur 2 ou de la matrice 3, l'axe de pliage de la pièce à plier étant parallèle aux arêtes du V de la matrice. Ces moyens peuvent être montés solidaires du tablier supérieur 34 ou du poinçon 10, l'axe de pliage de la pièce à plier étant alors parallèle à l'arête inférieure du poinçon. Bien entendu, ces moyens d'émission et de réception peuvent aussi être fixés sur le sol ou le support de la presse.

Le dispositif de l'invention permet d'obtenir une mesure instantanée de l'angle de pliage très précise, à condition que l'axe du faisceau optique soit rigoureusement parallèle à l'axe de pliage de la pièce à plier. On obtient ce parallélisme rigoureux, par exemple, au moyen de vis micrométriques agissant sur la source lumineuse et disposées à angle droit d'un pivot, de telle sorte que le réglage de l'une n'influence pas le réglage de l'autre. La détection de la direction correcte du faisceau peut être réalisée à l'aide d'un objectif à champ réglable de petit diamètre, par exemple 1 centimètre, solidaire de la source lumineuse et disposé dans le faisceau lumineux ou éventuellement à côté de celui-ci, derrière une deuxième source lumineuse autonome parallèle à la première. L'objectif à champ réglable est réglé de telle façon que la partie du faisceau lumineux qui l'intercepte soit focalisée sur une cellule photo-électrique à quatre quadrants, disposée à une distance déterminée de l'objectif et solidaire des moyens de réception. Ce dispositif de réglage est agencé de façon que, lorsqu'on obtient quatre signaux de même valeur sur les quatre quadrants de la cellule photo-électrique, en agissant de façon manuelle ou automatique sur les vis micrométriques, on obtienne un faisceau rigoureusement parallèle à l'axe de pliage de la pièce à plier.

**Revendications**

1. Dispositif optique à faisceau lumineux pour le contrôle automatique de l'opération de pliage lors du pliage avec une presse-plieuse, caractérisé en ce qu'il comprend des moyens d'émission (1), montés d'un côté de la presse, destinés à produire au moins un faisceau lumineux parallèle (8), dirigé parallèlement à l'axe de pliage de la pièce à plier, et des moyens de réception (4), montés de l'autre côté de la presse, destinés à analyser l'ombre projetée du profil de la pièce à plier (9) et de l'outillage, et à déterminer l'angle de pliage instantané de ladite pièce.

2. Dispositif selon la revendication 1, caractérisé en ce que les moyens d'émission comportent une source lumineuse (5) et un dispositif optique (6, 7) produisant un faisceau lumineux (8) de grand diamètr par exemple 60 milimètres.

3. Dispositif selon la revendication 2, caractérisé en ce que les moyens de réception comportent un écran (14) entraîné en rotation et percé d'au moins un trou (15) destiné à la formation d'un faisceau lumineux tournant (16) sur au moins une diode de réception (18).

4. Dispositif selon la revendication 3, caractérisé en ce que la source lumineuse est disposée à une extrémité de la presse, l'écran étant disposé à l'autre extrémité de la presse et entraîné en rotation par un moteur (12), au moins un moyen de déviation (17), solidaire de l'ensemble écran-moteur, étant destiné à dévier le faisceau lumineux tournant (16) sur la diode de réception (18) reliée à un microordinateur (20), le microordinateur étant d'autre part relié à un codeur d'angle (13), solidaire du moteur (12), et au moyen de commande du mouvement de pliage de la presse.

5. Dispositif selon la revendication 4, caractérisé en ce que le moyen d'écran (14) est percé d'une pluralité de trous (15) et constitue le couvercle d'une boîte (11), le moyen de déviation (17) étant contenu à l'intérieur de la boîte, de façon à dévier la pluralité de faisceaux tournants (16) sur un réseau de photodiodes (18) disposées sur un axe coïncidant avec l'axe de rotation (19) du moteur.

6. Dispositif selon la revendication 2, caractérisé en ce que les moyens de réception comportent un dispositif optique destiné à projeter l'ombre de la pièce à plier et de l'outillage sur un récepteur d'images électronique, relié à un microordinateur.

7. Dispositif selon la revendication 1, caractérisé en ce que les moyens d'émission comportent une source lumineuse émettant un rayon lumineux de petit diamètre (22) et un dispositif de déviation dudit faisceau destiné à produire au moins un faisceau lumineux tournant (26, 27) parallèle à l'axe de pliage de la pièce à plier.

8. Dispositif selon la revendication 7, caractérisé en ce que les moyens d'émission sont constitués par un dispositif d'émission d'un rayon laser dont le faisceau (22), parallèle à l'axe de pliage de la presse à plier, est dévié par un premier miroir (23), puis par un deuxième miroir (24) semi-transparent et disposé parallèlement à un troisième miroir (28), les deuxième et troisième miroirs étant agencés de façon que le faisceau laser (22) soit décomposé en deux faisceaux parallèles (26, 27), les trois miroirs étant solidaires d'une plaque entraînée en rotation par un moteur tournant.

9. Dispositif selon la revendication 1, caractérisé en ce que les moyens d'émission comportent au moins une diode émettrice disposée sur un support pouvant être mis en rotation par un moteur autour d'un axe parallèle à l'axe de pliage de la pièce à plier, la diode produisant un faisceau lumineux parallèle audit axe.

10. Dispositif selon l'une des revendications 8 ou 9, caractérisé en ce que les moyens de réception comportent un dispositif de déviation des faisceaux tournants sur au moins une diode réceptrice disposée sur l'axe de rotation du moteur et reliée à un microordinateur, le microordinateur étant relié à un codeur d'angle solidaire du moteur et au moyen de commande du mouvement de pliage de la presse.

11. Dispositif selon l'une des revendications précédentes, caractérisé en ce qu'il comporte en outre un dispositif de réglage de la direction du faisceau lumineux (8, 22) constitué d'au moins deux vis micrométriques solidaires de la source lumineuse et agencées de façon à modifier la direction du faisceau (8, 22), et d'un objectif à champ réglable, traversé par un faisceau lumineux et agencé de façon à permettre la focalisation du faisceau lumineux le traversant sur un moyen de réception à quatre quadrants solidaire des moyens de réception (4).

12. Dispositif selon l'une des revendications 4, 5, 6, 10 ou 11, caractérisé en ce que le microordinateur est programmé de façon à analyser l'ombre projetée du profil de la pièce à plier et de l'outillage, de façon à déterminer, pendant l'opération de pliage, l'épaisseur de la pièce à plier, l'angle de pliage instantané de ladite pièce, la variation de l'épaisseur de l'ombre projetée du profil de la pièce provoquée par la déformation des tabliers inférieur et supérieur de la presse sous les efforts dus au pliage et à donner l'ordre de compenser automatiquement cette déformation, et le retour élastique de la pièce à plier, et à détecter toute ombre suspecte apparaissant dans le champ du faisceau lorsque le poinçon est situé au-dessus d'une position de sécurité.

**Claims**

1. Optical means comprising a light beam for automatically controlling the bending operation when bending with a press brake, characterised in that it comprises emission means (1), mounted to one side of the press, intended for producing at least one parallel light beam (8), directed parallel to the bending axis of the workpiece to be bent, and reception means (4), mounted on the other side of the press, intended for analysing the projected shadow of the profile of the workpiece (9) to be bent and of the tooling, and for determining the instantaneous bending angle of the said member.

2. Means according to claim 1, characterised in that the emission means comprise a light source (5) and an optical means (6, 7) producing a light beam (8) of large diameter, for example 60 millimetres.

3. Means according to claim 2, characterised in that the reception means comprise a screen (14) which is driven in rotation and which has drilled therein at least one hole (15), intended for the formation of a rotating light beam (16) on at least one receiver diode (18).

4. Means according to claim 3, characterised in that the light source is situated at one end of the press, the screen being disposed at the other end of the press and being driven in rotation by a motor (12), at least one deflecting means (17), fast with the screen-motor assembly, being adapted to deflect the rotating light beam (16) on to the receiver diode (18) connected to a microordinator (20), the latter, on the other hand, being connected to an angle coder (13) fast with the motor (12), and to a means for controlling the bending movement of the press.

5. Means according to claim 4, characterised in that the screen means (14) has a plurality of holes (15) drilled therein and forms the cover of a housing (11), the deflecting means (17) being contained within the housing, so as to deflect the plurality of the rotating beams (16) on to a lattice of photodiodes (18) disposed on an axis coincident with the axis of rotation (19) of the motor.

6. Means according to claim 2, characterised in that the reception means comprise an optical device designed for projecting the shadow of the workpiece to be bent and the shadow of the tooling on to an electronic image receiver connected to a microordinator.

7. Means according to claim 1, characterised in that the emission means comprise a light source emitting a light beam of small diameter (22) and a device for deviating the said beam and intended for producing at least one rotating light beam (26, 27) parallel to the bending axis of the member to be bent.

8. Means according to claim 7, characterised in that the emission means are formed by a laser beam emitting device, of which the beam (22), parallel to the bending axis of the press brake, is deflected by a first mirror (23), then by a second mirror (24) which is semi-transparent and is disposed parallel to a third mirror (28), the second and third mirrors being so arranged that the laser beam (22) is split up into two parallel beams (26, 27), the three mirrors being fast with a plate driven in rotation by a rotating motor.

9. Means according to claim 1, characterised in that the emission means comprise at least one emitting diode disposed on a support which is able to be rotated by a motor around a shaft parallel to the bending axis of the workpiece to be bent, the diode producing a light beam parallel to the said axis.

10. Means according to one of the claims 8 or 9, characterised in that the receiver means comprise an arrangement for deflecting the rotating beams on to at least one receiver diode disposed on the axis of rotation of the motor and connected to a microordinator, the latter being connected to an angle coder fast with the motor and to the means for controlling the bending movement of the press.

11. Means according to one of the preceding claims, characterised in that it also comprises a means for regulating the direction of the light beam (8, 22), formed of at least two micrometer screws fast with the lighting source and so arranged as to modify the direction of the beam (8, 22), and an adjustable field objective, traversed by a light beam and so arranged as to permit the focusing of the light beam passing through it on to a receiving means with four quadrants fast with the receiving means (4).

12. Means according to one of the claims 4, 5, 6, 10 or 11, characterised in that the microordinator is programmed so as to analyse the projected shadow of the profile of the workpiece to be bent and of the tooling, in such manner as to determine, during the bending operation, the thickness of the workpiece to be bent, the instantaneous bending angle of the said workpiece, the variation in the breadth of the projected shadow of the profile of the workpiece, caused by the deformation of the lower and upper tables of the press under the forces due to the bending and to give the order for automatically compensating for this deformation, and the elastic return of the workpiece, and to detect any suspect shadow appearing in the field of the beam when the punch is situated above a safety position.

**Patentansprüche**

1. Optische Vorrichtung mit einem Lichtstrahl zur automatischen Überwachung des Biegevorgangs während des Biegens in einer Biegepresse, dadurch gekennzeichnet, daß sie eine Sendeanordnung (1) aufweist, die auf einer Seite der Presse angeordnet ist zum Erzeugen mindestens eines parallelen Lichtstrahles (8), der parallel zur Biegeachse des zu biegenden Werkstücks ausgerichtet wird sowie eine Empfängeranordnung (4) aufweist, die auf der anderen Seite der Presse angeordnet ist zum Analysieren des vom Profil des zu biegenden Werkstücks (9) und des vom Werkzeug geworfenen Schattens und zum Bestimmen des augenblicklichen Biegewinkels des Werkstücks.

2. Vorrichtung nach Anspruch 1, dadurch gekennzeichnet, daß die Sendeanordnung eine Lichtquelle (5) aufweist sowie eine optische Anordnung (6, 7) zur Erzeugung eines Lichtstrahls (8) großen Durchmessers z.B. von 60 Millimetern.

3. Vorrichtung nach Anspruch 2, dadurch gekennzeichnet, daß die Empfängeranordnung eine drehbare Blende (14) aufweist, die von wenigstens einer Öffnung (15) durchsetzt ist zur Bildung eines sich drehenden Lichtstrahls (16) auf wenigstens eine Empfängerdiode (18).

4. Vorrichtung nach Anspruch 3, dadurch gekennzeichnet, daß die Lichtquelle an einem Ende der Presse angeordnet ist, daß die Blende am anderen Ende der Presse angeordnet ist und von einem Motor (12) in Drehungen versetzt wird und daß wenigstens eine Ablenkeinheit (17), die fest mit der Anordnung Blende-Motor verbunden ist, dazu dient, den sich drehenden Lichtstrahl (16) auf die Empfängerdiode (18) zu lenken, die mit einem Mikrorechner (20) verbunden ist, welcher andererseits mit einem mit dem Motor (12) fest verbundenen Winkelcodierer (13) verbunden ist, sowie mit einer Steueranordnung für den Biegevorgang der Presse.

5. Vorrichtung nach Anspruch 4, dadurch gekennzeichnet, daß die Blendeanordnung (14) eine Vielzahl von Öffnungen (15) aufweist und die Abdeckung eines Gehäuses (11) bildet, daß die Ablenkeinheit (17) im Inneren des Gehäuses derart angeordnet ist, daß sie eine Vielzahl von sich drehenden Strahlen (16) auf ein Netz von Fotodioden (18) lenkt, die entlang einer Achse angeordnet sind, welche mit der Drehachse (19) des Motors zusammenfällt.

6. Vorrichtung nach Anspruch 2, dadurch gekennzeichnet, daß die Empfängeranordnung eine optische Anordnung aufweist zum Projizieren des Schattens des zu biegenden Werkstücks und des Werkzeugs auf einen elektronischen Bildempfänger, der mit einem Mikrorechner verbunden ist.

7. Vorrichtung nach Anspruch 1, dadurch gekennzeichnet, daß die Sendeanordnung eine Lichtquelle aufweist, die einen Lichtstrahl mit kleinem Durchmesser (22) aussendet und eine Ablenkanordnung für den Strahl aufweist, um wenigstens einen sich drehenden Lichtstrahl (26, 27) parallel zur Biegeachse des zu biegenden Werkstücks zu erzeugen.

8. Vorrichtung nach Anspruch 7, dadurch gekennzeichnet, daß die Sendeanordnung aus einer Anordnung zum Aussenden eines Laserstrahls besteht, dessen Strahl (22) parallel zur Biegeachse der Biegepresse von einem ersten Spiegel (23) abgelenkt wird, anschließend von einem zweiten halbdurchlässigen Spiegel (24), der parallel zu einem dritten Spiegel (28) angeordnet ist, wobei der zweite und der dritte Spiegel derart ausgestaltet sind, daß der Laserstrahl (22) in zwei Parallelstrahlen (26, 27) aufgespalten wird, wobei die drei Spiegel mit einer von einem sich drehenden Motor in Drehungen versetzten Platte fest verbunden sind.

9. Vorrichtung nach Anspruch 1, dadurch gekennzeichnet, daß die Sendeanordnung wenigstens eine Sendediode aufweist, die auf einer Halterung angeordnet ist, welche von einem Motor um eine Achse parallel zur Biegeachse des zu biegenden Werkstücks in Drehungen versetzt werden kann, wobei die Diode einen Lichtstrahl parallel zu dieser Achse erzeugt.

10. Vorrichtung nach einem der Ansprüche 8 oder 9, dadurch gekennzeichnet, daß die Empfängeranordnung eine Ablenkanordnung für die sich drehenden Lichtstrahlen auf wenigstens eine Empfängerdiode aufweist, die auf der Drehachse des Motors angeordnet ist und die mit einem Mikrorechner verbunden ist, wobei der Mikrorechner mit einem fest mit dem Motor verbundenen Winkelcodierer und mit einer Steueranordnung für die Biegebewegung der Presse verbunden ist.

11. Vorrichtung nach einem der vorhergehenden Ansprüche, dadurch gekennzeichnet, daß sie außerdem eine Steueranordnung für die Richtung des Lichtstrahls (8, 22) aufweist, die aus wenigstens zwei Mikrometerschrauben besteht, die mit der Lichtquelle fest verbunden sind und in der Lage sind, die Richtung des Lichtstrahls (8, 22) zu verändern und aus einem Objektiv mit einstellbarem Bildfeld besteht, das vom Lichtstrahl durchsetzt wird und die Fokussierung dieses Lichtstrahls auf eine in vier Quadranten unterteilte Empfängeranordnung ermöglicht, die mit der Empfängeranordnung (4) fest verbunden ist.

12. Vorrichtung nach einem der Ansprüche 4, 5, 6, 10 oder 11, dadurch gekennzeichnet, daß der Mikrorechner derart programmiert ist, daß er den vom Profil des zu biegenden Werkstücks und des Werkzeugs geworfenen Schatten analysiert, und dergestalt während des Biegevorganges die Dicke des zu biegenden Werkstücks feststellt, den augenblicklichen Biegewinkel des Werkstücks, die Veränderung der Dicke des vom Profil des Werkstücks geworfenen Schattens aufgrund der Verformung der unteren und oberen Pressenteile unter der Wirkung der Biegekräfte und zur Erzeugung von Befehlen, um automatisch diese Verformungen zu kompensieren sowie zur elastischen Rückkehr des zu biegenden Werkstücks sowie zum Feststellen eines jeglichen verdächtigen Schattens im Strahlbereich, wenn sich der Stempel oberhalb einer Sicherheitsstellung befindet.

# FIG.1

FIG.2

**FIG.3**

**FIG.4**

**FIG. 5**

# FIG. 6

EP 0 224 437 B1